(19) Europäisches Patentamt
European Patent Office
Office européen des brevets

(11) Publication number: **0 219 857 B1**

(12) # EUROPEAN PATENT SPECIFICATION

(45) Date of publication of patent specification: **08.01.92**

(51) Int. Cl.5: **C08L 33/06**, C08F 299/06, C08F 265/04

(21) Application number: **86114596.9**

(22) Date of filing: **21.10.86**

Divisional application 90117335.1 filed on 21/10/86.

(54) **Storage stable (meth)acrylate plastisols.**

(30) Priority: **25.10.85 US 791621**

(43) Date of publication of application: **29.04.87 Bulletin 87/18**

(45) Publication of the grant of the patent: **08.01.92 Bulletin 92/02**

(84) Designated Contracting States: **BE DE ES FR GB IT NL SE**

(56) References cited:
**EP-A- 0 173 057**
**DE-A- 2 812 016**
**US-A- 4 210 567**

(73) Proprietor: **W.R. Grace & Co.-Conn. (a Connecticut corp.)**
**Grace Plaza 1114 Avenue of the Americas**
**New York New York 10036(US)**

(72) Inventor: **Lin, Shiow Ching**
**3525 Angus Valley Trail**
**Ellicott City, Md. 21043(US)**
Inventor: **Romm, Susan Snyder**
**3725 Monmouth Place**
**Laurel, Md. 20707(US)**

(74) Representative: **UEXKÜLL & STOLBERG Patentanwälte**
**Beselerstrasse 4**
**W-2000 Hamburg 52(DE)**

EP 0 219 857 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

1. Field of the Invention

This invention is directed to storage stable (meth)acrylic plastisols having storage stability at 40°C for at least three days and plasticizability at a temperature below 120°C in 5 minutes. This invention also relates to novel plasticizers which provide storage stability at 40°C for at least 3 days and plasticizability of poly(meth)acrylates and their copolymers at a temperature below 120°C in 5 minutes.

The invention also relates to a process for forming a bond, seal or coating.

2. Description of the Prior Art

A plastisol is composed of a high molecular weight polymer dispersed in a liquid plasticizer which is a material incorporated in a plastic to increase its workability. The plastisol may vary from a thin, pourable liquid to a thick paste or dough. Upon heating, the plastisol turns to a pregelled dispersion, to a gelled dispersion and then to a fused dispersion. The viscosity of a plastisol decreases with the increase of temperature at the beginning. At a certain temperature, the viscosity increases sharply and the liquid dispersion turns to an opaque solid, a gelled dispersion. This temperature is called the minimum fluxing temperature which is defined as the temperature at which a plastisol develops sufficient physical integrity to permit being lifted from the fusion plate. Upon further heating at a higher temperature, the plastisol turns to a clear plasticized plastic.

To prepare a plastisol, two basic ingredients, a high molecular weight polymer powder and a liquid plasticizer, are required. These must form a stable dispersion after blending. Physically, the plasticization process of a plastisol is the permeation of the plasticizer into the polymer particle to solvate the polymer molecules.

Originally, plastisol technology was developed for fabrication of polyvinyl chloride (PVC) and its copolymers. PVC and its copolymers degrade with the elimination of hydrogen chloride and form a colored product below their melting temperature. The degradation of these polymers under service conditions is still an unacceptable problem in some applications.

Application of plastisol technology has been extended to the preparation of acrylic plastisols, described in U.S. Patent 4,210,567. The cited patent described the preparation of storage stable acrylic plastisols. However, the storage condition was at room temperature. The plasticizers mentioned in the cited patent were found not to provide the required storage stability at 40°C, a requirement for stability during shipping, as will be shown in examples hereinafter. Acrylic plastisols containing compatible liquid plasticizers, reactive diluents and photoinitiators were also discussed in U.S. 4,125,700 and U.S. 4,465,572.

In reactive plastisol technology, which is a combination of plastisol and thermosetting technologies, the dispersion fuses into a plasticized solid at a temperature much lower than the melting point. Because the fluxing process is extremely quick, the thermosettable material provides a handling strength or B-stage strength in a few seconds. The final cure can then be made to occur either by subsequent heating to the cure temperature or by irradiation, e.g., UV in the presence of a photoinitiator or by high energy ionizing radiation.

From DE-A-28 120 016 plastisols of an acrylate polymer which predominantly consists of methylmethacrylate units were known. Various plasticizers and in addition photopolymerizable monomers that may also function as plasticizers are part of the compositions. Diisocyanates, ethers of long chain alcohols and polyethylene glycol dimethacrylate may also be present in these compositions, but in addition normally phthalate-type plasticizers were used. There is, however, no suggestion in this document of the use of polyether or polyester diol based urethane di(meth)acrylates or urethane ester(meth)acrylates as plasticizers for the poly(meth)acrylates. But lacking this urethane linkage the resulting acrylate plastisol will lack the strength necessary and received by the invention.

OBJECTS OF THE INVENTION

One object of the instant invention is to produce a novel process and composition: A further object of the instant invention is to produce a (meth)acrylic plastisol composition having storage stability at 40°C for at least 3 days and plasticizability at a temperature below 120°C in 5 minutes. A yet further object of the instant invention is to produce novel plasticizers for poly(meth)acrylates. Another object of the instant invention is to produce a plastisol composition which is useful as an adhesive, coating or sealant. Yet another object of the instant invention is to produce a plastisol composition which on curing substantially

minimizes or precludes exuding or extraction of the plasticizer. Still another object of the invention is to produce a plastisol composition which on heating to the fluxing temperature acquires handling strength and cures at or above said fluxing temperature. Yet another object of the invention is to produce a plastisol composition which on heating to the fluxing temperature acquires handling strength and cures on subjection to radiation. A further object of the instant invention is to produce a process which comprises heating a reactive plastisol composition to at least its fluxing temperature but below the flow temperature of the thermoplast to flux the plastisol and develop handling strength and, thereafter, obtain a cured material by heating above its curing temperature or by irradiation. Other objects will become apparent from a reading hereinafter.

## DESCRIPTION OF THE INVENTION

This invention is directed to (meth)acrylic plastisols having storage stability at 40°C for at least 3 days and plasticizability at a temperature below 120°C in 5 minutes comprising

(1) a poly (meth) acrylate in particle form,

(2) a liquid plasticizer member of the group consisting of:

(a) the reaction product of one mole of a polyether or polyester diol, two moles of a diisocyanate and two moles of a hydroxyalkyl (meth)acrylate;

(c) the reaction product of one mole of a polyester or polyether diol, one mole of a diisocyanate, one mole of hydroxyalkyl (meth)acrylate and one mole of an acyl halide; and

(d) mixtures of (a) and (c);

and, optionally, either

(3) a free radical thermal initiator, or

(4) a photoinitiator.

The plastisol dispersion after fluxing can form a sealant, coating or adhesive after the curing reaction.

As used herein, the term poly(meth)acrylate includes both acrylic and methacrylic homopolymers as well as copolymers containing same.

In the instant invention, the novel plasticizers allow the poly(meth)acrylate resin plastisols to be storage stable at 40°C (shipping temperature) for at least three days and also permit one to plasticize the resin at temperatures below or at 120°C within a 5-minute period.

The plastisol of the invention operates in the same method as conventional plastisols. That is, herein the term "plastisol" refers to dispersions of finely divided plastic resin particles in a liquid non-volatile plasticizer in which the resin is insoluble and cannot be swollen by the plasticizer at temperatures up to 40°C. However, at elevated temperatures, e.g., 100°C, the resin fluxes, i.e., is substantially completely plasticized by the plasticizer so that a homogenous, solid solution is obtained which forms a rubbery plastic mass. At this point the plastisol has handling mechanical strength. Further heating at or above the fluxing temperature or irradiation results in a material with ultimate structural strength. Since the plasticizer is reactive such as plasticizer (a), it will crosslink to a thermoset and form a semi-interpenatrating network. In addition to the powdered resin and the plasticizer, the formulation may also contain latent curing agents such as thermal initiators or photoinitiators, electrically conductive particles, fillers, pigments, stabilizers and various conventional compound ingredients.

The plastisol compositions herein are formed by admixture of 100 parts by weight of poly(meth)acrylate resin particles with about 5 to 2,000 parts by weight of plasticizer per 100 parts of resin and, when necessary, contain 0.01% to 5% by weight of the plasticizer of either a latent thermal initiator or a photoinitiator.

Conventional fillers can also be added to the plastisol in amounts ranging from 0.1 to 40% by weight of the plastisiol composition. Such fillers include, but are not limited to, calcium carbonate, diatomaceous silica, talc, alumina, aluminum, magnesium or calcium silicate, clay and the like. Thereafter, the plastisol admixture is heated at a temperature at or above the fluxing temperature which is lower than the melting point of the resin for a time sufficient to plasticize the resin by the plasticizer to obtain a homogeneous, solid solution which is a rubbery mass, i.e., a fluxed product. The fluxed product and reactive plastisol are both useful as adhesives or sealants. For example, the solid fluxed material can be placed between two adherends and heated at or above a temperature whereat either the thermal initiator decomposes and initiates curing of the plasticizer or the plasticizer, per se, initiates polymerization which results in a cured adhesive. The plastisol dispersion can also be placed between two adherends and heated at or above the decomposition temperature of the initiator to flux and initiate the polymerization at the same time. Additionally, the plastisol dispersion can also be placed between two adherends at least one of which is transparent, heated to its fluxing temperature to obtain a plastic fluxed product and, thereafter, radiated with UV to obtain a cured

adhesive.

The particles of poly (meth)acrylate have a particle size in the range from 0.01 to 1,500 microns.

In the instant invention, where the plasticizer is Plasticizer (a), i.e., the reaction product of one mole of a polyether or polyester diol, two moles of a diisocyanate and two moles of a hydroxyalkyl (meth)acrylate, the plasticizer can be made up by adding all the ingredients to a stirred reaction vessel in one step or it can be done sequentially. If sequentially, the hydroxyalkyl (meth)acrylate, diol and diisocyanate can be added together or the diol can be added along with the isocyanate in the first step with the hydroxyalkyl (meth)-acrylate being added in a second step or the hydroxyalkyl (meth)acrylate can be reacted with the isocyanate, and adduct can, thereafter, be reacted with the diol as shown in the following equations:

*PLASTICIZER a -PREPARATION*

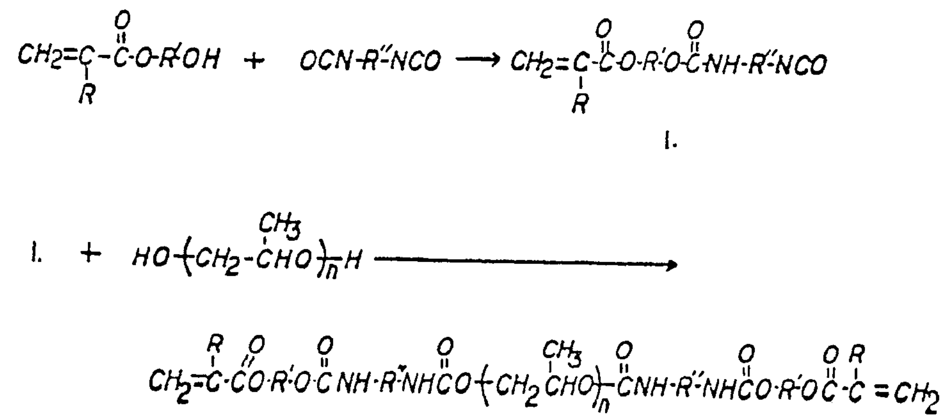

In preparing Plasticizer (c), i.e., the reaction product of one mole of a polyester or polyether diol, one mole of a diisocyanate, one mole of hydroxyalkyl (meth)acrylate and one mole of an acyl halide, the reaction is carried out in either a two-step or a three-step process. In the two-step process the hydroxyalkyl (meth)acrylate, the diol and the diisocyanate are reacted in the first step and, thereafter, the acyl chloride is added to the reaction mixture. Preferably, however, the reaction is carried out in a three-step process with the hydroxyalkyl (meth)acrylate being reacted with a diisocyanate in the first step. The resultant adduct is then reacted with the diol in the second step and the resultant adduct from this step is then reacted with the acyl chloride in a third step as shown in the following equations:

*PLASTICIZER C — PREPARATION*

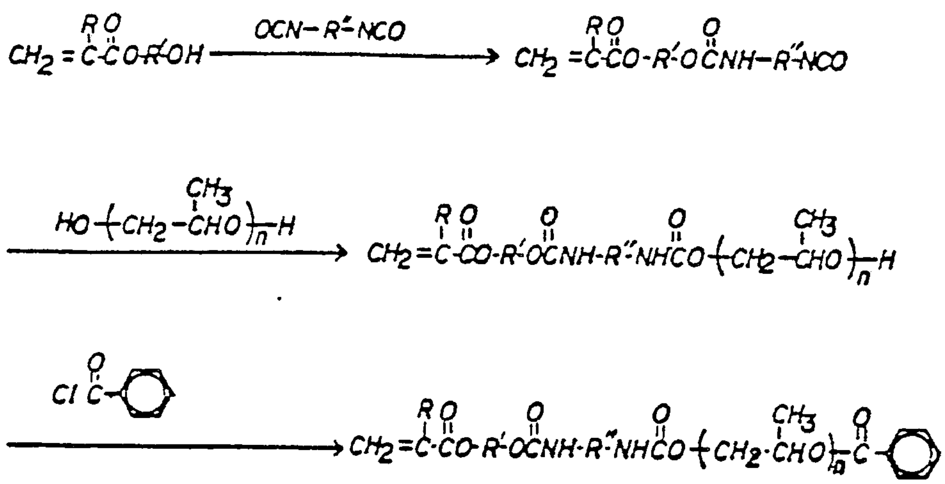


The polyester diol reactants useful to make plasticizers in the present invention include any conventionally used in the preparation of flexible and semi-flexible urethane polymer foams. The polyester diol reactant usually has a molecular weight of at least 200 and optimally between 700 and 3,000.

The range of polyester diol compounds useful for preparing the plasticizer in the present invention are well known to the art and can be prepared by, for example, the reaction of a diol with a dicarboxylic acid compound, each oontaining from 2 to 36 carbon atoms in the molecule. The polycarboxylic acid includes such acid precursors as the corresponding acid anhydrides or acid halides or even, for example, alkyl esters. The preferred acids are the dicarboxylic acids containing from 4 to 12 carbon atoms in the molecule. Examples of such preferred carboxylic acid compounds which can be used include, for example, aromatic acids such as phthalic acid, terephthalic acid, isophthalic acid, tetrachlorophthalic acid, cycloaliphatic acids such as dimerized linoleic acid, maleated and fumarated rosin acids and cyclohexane-1,4-diacetic acid, but especially the aliphatic acids such as oxydipropionic, succinic, glutaric, adipic, azelaic, suberic, sebacic acids, or combinations of such acids. The polyester polyols can also be prepared from corresponding lactones, such as $\gamma$-butyro; or $\epsilon$-caprolactones, for example.

It is recognized that certain compounds which are considered by those skilled in the art as polyester resins also contain ether linkages, e.g., esters prepared from dipropylene glycol. However, the primary character of such resins is considered to be that of an ester.

In the present invention, the polyether diol used to make the plasticizer can also be selected from any of the wide variety of polyether diol compounds available and conventionally used by the art for the preparation of polyether-type polyurethanes. The most common polyether diol compounds are the polyoxyalkylene polyether diols.

The alkylene oxides used in preparing the poyethers preferably are these which contain from two to about four carbon atoms, for example, ethylene oxide, 1,3-propylene oxide and 1,2-butylene oxide, and homopolymers and copolymers thereof. Other reactants can also be used in preparing the dihydric polyalkylene ether, such as cylic ethers like di- and tetramethylene ethers.

Also useful are the polyaralkylene ether diols which are derived from the corresponding aralkylene oxides such as, for example, styrene oxide, alone or mixed with alkylene oxide.

Generally, propylene oxide, i.e., the 1,2-propylene oxide, and mixtures of 1,2-propylene oxide with ethylene oxide are preferred for the preparing of the polyether diol reactant.

The polyether diols used to form plasticizers in the present invention preferably have a molecular weight of at least 200 and optimally of from 700 to 3,000. The formula for plasticizer c given above represents the using of the preferred 1,2-propylene oxide for the preparing of the polyether diol reactant. The general formula of plasticizer c is

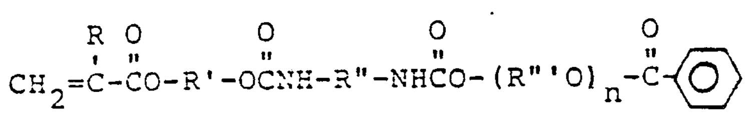

wherein R is H or $-CH_3$; R' is an alkylene containing 1 - 3 carbon atoms; R" is the organic moiety remaining after reaction of both isocyanate groups on a diisocyanate; and R"' is the polyester or polyether moiety remaining after reaction of both terminal hydroxyl groups on a polyester or polyether diol,
and wherein further n is a figure corresponding to a molecular weight of the polyester-diol or polyether-diol of at least 200, especially between or from about 700 to 3000, respectively.

Further examples of the above conventional reactants are available in the literature. See, for example, Saunders and Frisch, supra.

The organic diisocyanates useful in the present invention are also conventional. The useful isocyanates include, for example, the aromatic, aliphatic, cycloaliphatic and heterocyclic diisocyanates.

Suitable organic diisocyanates include, for example, n-butylene diisocyanate, methylene diisocyanate, m-xylylene diisocyanate, p-xylylene diisocyanate, cyclohexyl 1,4-diisocyanate, dicyclohexylmethane-4,4'-diisocyanate,m-phenylene diisocyanate, p-phenylene diisocyanate, 3-(alpha-isocyanatoethyl)-phenyl isocyanate, 2,6 diethylbenzene-1,4-diisocyanate, diphenyldimethylmethane-4,4'-diisocyanate, ethylidene diisocyanate, propylene-1,2-diisocyanate, cyclohexylene-1,2-diisocyanate, 2,4-toluylene diisocyanate, 2,6-toluylene diisocyanate, 3,3'-dimethyl-4,4'-biphenylene diisocyanate, 3,3-dimethoxy-4,4'-biphenylene diisocyanate, 3,3-diphenyl-4,4'-biphenylene diisocyanate, 4,4-biphenylene diisocyanate, 3,3'-dichloro-4,4'-biphenylene diisocyanate, 1,5-naphthylene diisocyanate, isophorone diisocyanate and the like.

The aromatic diisocyanates are generally the least expensive and most reactive diisocyanates available and, therefore, are preferred. The aromatic diisocyanates, especially the toluylene diisocyanate isomers, are used commercially. However, for certain purposes, other diisocyanates, especially the aliphatic, aralkyl and

cycloalkyl diisocyanates have valuable properties and can be used alone or, if desired, in admixture with, e.g., toluylene diisocyanates. The aralkyl, aliphatic and cycloaliphatic diisocyanates are especially useful when resistance against degradation and discoloration due to oxidation or light is needed. The aralkyl diisocyanates are generally not useful alone, but can be used in combination with the other types for special purposes.

Generally,in carrying out the urethane forming reactions, the only significant groups in the reactant compounds are the isocyanate groups and active hydrogen groups, e.g., OH groups, which are reactive therewith. Any other group can be present in the reactants and in the urethane polymer, so long as the group does not interfere with the basic isocyanate-active hydrogen reaction. Acyclic, alicyclic, aromatic and heterocyclic radicals are all possible substituents on the active hydrogen and polyisocyanate reactants.

The acyl halides employed as reactants to make plasticizers in the instant invention have the general formula:

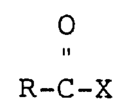

wherein X is a halide and R is an organic moiety.

Examples of acyl halides operable herein include, but are not limited to, benzoyl, acetyl, propionyl, butyryl, valeryl, caproyl, lauryl myristyl or stearyl halide.

Various conventional hydroxyalkyl (meth)acrylates are operable in the instant invention including, but not limited to, hydroxyethyl acrylate, hydroxypropyl acrylate, hydroxybutyl acrylate, hydroxyethyl methacrylate, hydroxypropyl methacrylate, hydroxybutyl methacrylate and the like.

In forming the plasticizers (a) the present invention, catalytic amounts of a catalyst may be employed to speed up the reaction. Such catalysts are well known to those in the art and include organometallic compounds such as stannous octoate, stannous oleate, dibutyl tin dilaurate, cobalt acetylacetonate, ferric acetylacetonate, lead naphthenate and dibutyl tin diacetate.

Mixtures of plasticizers with each other are operable in weight ratios of 1 to 99 to 99 to 1.

The thermal initiators used herein for curing plasticizers (a) and (c) are free radical initiators selected from substituted or unsubstituted pinacols, azo compounds, thiurams, organic peroxides and mixtures thereof. These initiators are added in amounts ranging from 0.01 to 10% by weight of the plasticizer.

The organic peroxides operable are of the general formula:

$R-O-O-(R_1-O-O)_n-R$

wherein n = O or 1, R is independently selected from hydrogen, aryl, alkyl, aryl carbonyl, alkaryl carbonyl, aralkyl carbonyl and alkyl carbonyl and $R_1$ is alkyl or aryl, said alkyl groups containing 1 to 20 carbon atoms.

Examples of operable organic peroxides include, but are not limited to 2,5-dimethyl-2,5-di(t-butylperoxy)-hexane, 1,3-bis(t-butylperoxyisopropyl)benzene, 1,3-bis-(cumylperoxyisopropyl)benzene, 2,4-dichlorobenzoyl peroxide, caprylyl peroxide, lauroyl peroxide, t-butyl peroxyisobutyrate, benzoyl peroxide, p-chlorobenzoyl peroxide, hydroxyheptyl peroxide, di-t-butyl diperphthalate, t-butyl peracetate, t-butyl perbenzoate, dicumyl peroxide, 1,1-di(t-butylperoxy)-3,3,5-trimethylcyclohexane and di-t-butyl peroxide.

Examples of azo compounds operable herein include, but are not limited to, commercially available compounds such as 2-t-butylazo-2-cyanopropane; 2,2'-azobis-(2,4-dimethyl-4-methoxy-valeronitrile); 2,2'-azobis-(isobutyronitrile); 2,2'-azobis(2,4-dimethylvaleronitrile) and 1,1'-azobis(cyclohexanecarbonitrile).

The thiurams operable as thermal initiators herein are of the formula:

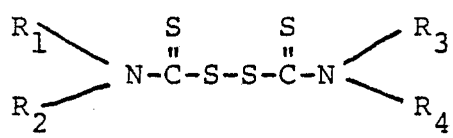

wherein $R_1$, $R_2$, $R_3$ and $R_4$ taken singly can be hydrogen, linear or branched alkyl having from 1 to 12 carbon atoms, linear or branched alkenyl having from 2 to 12 carbon atoms, cycloalkyl having from 3 to 10

ring carbon atoms, cycloalkenyl having from 3 to 10 ring carbon atoms, aryl having from 6 to 12 ring carbon atoms, alkaryl having from 6 to 12 ring carbon atoms, aralkyl having from 6 to 12 ring carbon atoms and, when taken together, $R_1$ and $R_2$ and $R_3$ and $R_4$ can each be a divalent alkylene group $-(C_nH_{2n})-$ having from 2 to 12 carbon atoms, a divalent alkenylene group $-(C_nH_{2n-2})-$ group having from 3 to 10 carbon atoms, a divalent alkadienylene group $-(C_nH_{2n-4})-$ having from 5 to 10 carbon atoms, a divalent alkatrienylene group $-(C_nH_{2n-6})-$ having from 5 to 10 carbon atoms, a divalent alkyleneoxyalkylene group $-(C_xH_{2x}OC_xH_{2x})-$ having a total of from 4 to 12 carbon atoms or a divalent alkyleneaminoalkylene group:

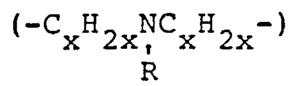

having a total of from 4 to 12 carbon atoms.

Operable thiurams include, but are not limited to, tetramethylthiuram disulfide, tetraethylthiuram disulfide, di-N-pentamethylenethiuram disulfide, tetrabutylthiuram disulfide, diphenyldimethylthiuram disulfide, diphenyldiethylthiuram disulfide, diethyleneoxythiuram disulfide and the like.

The substituted or unsubstituted pinacols operable herein as a thermal initiator have the general formula:

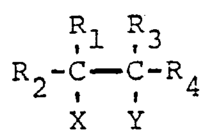

wherein $R_1$ and $R_3$ are the same or different substituted or unsubstituted aromatic radicals, $R_2$ and $R_4$ are substituted or unsubstituted aliphatic or aromatic radicals and X and Y which may be the same or different are hydroxyl, alkoxy or aryloxy.

Preferred pinacols are those wherein $R_1$, $R_2$, $R_3$ and $R_4$ are aromatic radicals, especially phenyl radical, and X and Y are hydroxyl.

Examples of this class of compounds include, but are not limited to, benzopinacol, 4,4′-dichlorobenzopinacol, 4,4′-dibromobenzopinacol, 4,4′-diiodobenzopinacol, 4,4′,4″,4‴-tetrachlorobenzopinacol, 2,4-2′,4′-tetrachlorobenzopinacol, 4,4′-dimethylbenzopinacol, 3,3′-dimethylbenzopinacol, 2,2′-dimethylbenzopinacol, 3,4-3′,4′-tetramethylbenzopinacol, 4,4′-dimethoxybenzopinacol, 4,4′,4″,4‴-tetramethoxybenzopinacol, 4,4′-diphenylbenzopinacol, 4,4′-dichloro-4″,4‴-dimethylbenzopinacol, 4,4′-dimethyl-4″,4‴-diphenylbenzopinacol, xanthonpinacol, fluorenonepinacol, acetophenonepinacol, 4,4′-dimethylacetophenone-pinacol, 4,4′-dichloroacetophenonepinacol, 1,1,2-triphenyl-propane-1,2-diol, 1,2,3,4-tetraphenylbutane-2,3-diol, 1,2-diphenylcyclobutane-1,2-diol, propiophenone-pinacol, 4,4′-dimethylpropiophenone-pinacol, 2,2′-ethyl-3,3′-dimethoxypropiophenone-pinacol, 1,1,1,4,4,4-hexafluoro-2,3-diphenyl-butane-2,3-diol.

As further thermal initiators according to the present invention, there may be mentioned: benzopinacol-mono methylether, benzopinacol-mono-phenylether, benzopinacol monoisopropyl ether, benzopinacol monoisobutyl ether, benzopinacol mono (diethoxy methyl) ether and the like.

Preferred photoinitiators for plasticizers (a) and (c) are the aldehyde and ketone carbonyl compounds having at least one aromatic nucleous attached directly to the

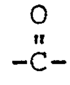

group. Various photoinitiators include, but are not limited to, benzophenone, acetophenone, o-methoxybenzophenone, acenapthene-quinone, methyl ethyl ketone, valerophenone, hexanophenone, alpha-phenylbutyrophenone, p-morpholinopropionphenone, dibenzosuberone, 4-morpholinobenzophenone, 4′-morpholinodeoxybenzoin, p-diacetylbenzene, 4-aminobenzophenone, 4′-methoxyacetophenone, benzaldehyde, alpha-tetralone, 9-acetylphenanthrene, 2-acetylphenanthrene, 10-thioxanthenone, 3-acetylphenanthrene, 3-acetylindone, 9-fluorenone, 1-indanone, 1,3,5-triacetylbenzene, thioxanthen-9-one, xanthrene-9-one, 7-H-benz[de]anthracen-7-one, 1-naphthaldehyde, 4,4′-bis(dimethylamino)-benzophenone, fluorene-9-one, 1′-acetonaphthone, 2′-acetonaphthone,2,3-butanedione, triphenylphosphine, tri-o-tolylphosphine, acetonaphthone, benz[a]anthracene 7.12 dione, etc. Another class of photoinitiators is the benzoin alkyl ethers, such as benzoin methyl ether, benzoin ethyl ether, benzoin isopropyl ether and benzoin isobutyl ether. Still another class of photoinitiators are the dialkoxyacetophenones exemplified by 2,2-dimethoxy-2-phenylacetophenone and 2,2-diethoxy-2-phenylacetophenone. Benzil ketals such as benzil dimethyl ketals are also operable herein as photoinitiators. The photoinitiators or mixtures thereof are usually added in an amount ranging from 0.01 to 5% by weight of the reactive plasticizer.

A class of actinic light useful herein for curing is ultraviolet light and other forms of actinic radiation which are normally found in radiation emitted from the sun or from artificial sources such as Type RS sunlamps, carbon arc lamps, xenon arc lamps, mercury vapor lamps, tungsten halide lamps and the like. Ultraviolet radiation may be used most efficiently if the photocurable composition contains a suitable photoinitiator. Curing periods may be adjusted to be very short and hence commercially economical by proper choice of ultraviolet source, photoinitiator and concentration thereof, temperature and molecular weight and reactive group functionality of the plasticizer. Curing periods of about 1 second duration are possible, especially in thin film applications such as desired, for example, in coatings.

When UV radiation is used, an intensity of 0.0004 to 60.0 watts/$cm^2$ in the 200-400 nanometer region is usually employed. High energy ionizing radiation can also be used for the curing step without the use of photoinitiators in the instant invention. If high energy ionizing irradiation is used, e.g., electron beam, a dose in the range of 0.01 - 10 megarads is employed at a dose rate of $1.0 \times 10^4$ - 4,000 megarads/second. Any radiation having an energy of greater than 3.0 electron volts is operable to cause the curing reaction of the instant invention.

In practicing the invention, it is sometimes possible to use a thermal initiator for curing Plasticizers (a) and (c) which decomposes at a temperature lower than the fluxing temperature of the plastisol, especially when the composition is quickly heated to the fluxing temperature. This is due to the fact that the fluxing rate is much faster than the curing rate at the fluxing temperature. Thus, one can heat quickly to the fluxing temperature, flux the plastisol and cool down below the decomposition temperature of the thermal initiator before curing occurs, thereby obtaining a thermoplastic plastisol ready to be cured to a thermoset adhesive on reheating.

The heating step to cure the fluxed solid plastisol is usually carried out for a period of 10 seconds to 30 minutes at a temperature below 120°C, preferably 80 -120°C, which is sufficient to fully cure the composition to a solid adhesive, coating or sealant product.

The heating step using a thermal initiator to cure the fluxed plastisol resin composition can be accomplished in several ways. In simple systems, the adhesive or sealant composition can be applied by manual means to a substrate or an adherend, contacted with another adherend and the substrate or assembled system heated in a forced air oven until a cured sealant or bond results.

Additionally and preferably, electromagnetic heating can be utilized as a faster and more efficient means of curing. In addition to the formation of high strength seals and bonds, electromagnetic techniques aid in (a) fast seal or bond setting times, and (b) automated part handling and assembly.

In practicing the instant invention, for example, dielectric heating can be used to seal or bond if the plastisol composition contains sufficient polar groups to heat the composition rapidly and allow it to form a sealant or bond the adherends. Inductive heating can also be used to form a sealant or bond. That is, when the sealant substrate or at least one of the adherends is an electrically conductive or ferromagnetic metal, the heat generated therein is conveyed by conductance to the composition thereby initiating the cure to form a sealant or an adhesive. In the instance where the substrate to be sealed or both adherends are plastic, it is necessary to add an energy absorbing material, i.e., an electrically conductive or ferromagnetic material, preferably in fiber or particle form (10-400 mesh (2,00-0,037 mm)) to the plastisol composition. The energy absorbing material is usually added in amounts ranging from 0.1 to 2 parts by weight, per 1 part by weight of the plastisol resin composition prior to fluxing. It is also possible to impregnate the plastic substrate or adherend at the bonding joint with particles of the energy absorbing material in order to use inductive heating, but care must be exercised that the plastic is not distorted.

The particulate electromagnetic energy absorbing material used in the plastisol composition when induction heating is employed can be one of the magnetizable metals including iron, cobalt and nickel or magnetizable alloys or oxides of nickel and iron and nickel and chromium and iron oxides. These metals and alloys have high Curie points (730° - 2,040°F).

Electrically conductive materials operable herein when inductive heating is employed include, but are not limited to, the noble metals, copper, aluminum, nickel, zinc as well as carbon black, graphite and inorganic oxides.

There are two forms of high frequency heating operable herein, the choice of which is determined by the material to be sealed or adhered. The major distinction is whether or not the material is a conductor or

non-conductor of electrical current. If the material is a conductor, such as iron or steel, then the inductive method is used. If the material is an insulator, such as wood, paper, textiles, synthetic resins, rubber, etc., then dielectric heating can be employed.

Most naturally occurring and synthetic polymers are non-conductors and, therefore, are suitable for dielectric heating. These polymers may contain a variety of dipoles and ions which orient in an electric field and rotate to maintain their alignment with the field when the field oscillates. The polar groups may be incorporated into the polymer backbone or can be pendant side groups, additives, extenders, pigments, etc. For example, as additives, lossy fillers such as carbon black at a one percent level can be used to increase the dielectric response of the plastisol composition. When the polarity of the electric field is reversed millions of times per second, the resulting high frequency of the polar units generates heat within the material.

The uniqueness of dielectric heating is in its uniformity, rapidity, specificity and efficiency. Most plastic heating processes such as conductive, convective or infrared heating are surface-heating processes which need to establish a temperature within the plastic by subsequently transferring the heat to the bulk of the plastic by conduction. Hence, heating of plastics by these methods, although operable herein, is a relatively slow process with a non-uniform temperature resulting in overheating of the surfaces. By contrast, dielectric heating generates the heat within the material and is therefore uniform and rapid, eliminating the need for conductive heat transfer. In the dielectric heating system herein the electrical frequency of the electromagnetic field is in the range 1 - 3,000 megahertz, said field being generated from a power source of 0.5 -1,000 kilowatts.

Induction heating is similar, but not identical, to dielectric heating. The following differences exist: (a) magnetic properties are substituted for dielectric properties; (b) a coil is employed to couple the load rather than electrodes or plates; and (c) induction heaters couple maximum current to the load. The generation of heat by induction operates through the rising and falling of a magnetic field around a conductor with each reversal of an alternating current source. The practical deployment of such a field is generally accomplished by proper placement of a conductive coil. When another electrically conductive material is exposed to the field, induced current can be created. These induced currents can be in the form of random or "eddy" currents which result in the generation of heat. Materials which are both magnetizable and conductive generate heat more readily than materials which are only conductive. The heat generated as a result of the magnetic component is the result of hysteresis or work done in rotating magnetizable molecules and as a result of eddy current flow. Polyolefins and other plastics are neither magnetic nor conductive in their natural states. Therefore, they do not, in themselves, create heat as a result of induction.

The use of the electromagnetic induction heating method for forming a sealant or adhesive bonding of plastic structures has proved feasible by interposing selected electromagnetic energy absorbing materials in an independent adhesive composition layer or gasket conforming to the surfaces to be bonded, electromagnetic energy passing through the adjacent plastic structures (free of such energy absorbing materials) is readily concentrated and absorbed in the adhesive composition by such energy absorbing materials, thereby rapidly initiating cure of the adhesive plastisol composition to an adhesive.

Electromagnetic energy absorbing materials of various types have been used in the electromagnetic induction heating technique for some time. For instance, inorganic oxides and powdered metals have been incorporated in bonds layers and subjected to electromagnetic radiation. In each instance, the type of energy source influences the selection of energy absorbing material. Where the energy absorbing material is comprised of finely divided particles having ferromagnetic properties and such particles are effectively insulated from each other by particle containing non-conducting matrix material, the heating effect is substantially confined to that resulting from the effects of hysteresis. Consequently, heating is limited to the "Curie" temperature of the ferromagnetic material or the temperature at which the magnetic properties of such material cease to exist.

The fluxed plastisol composition of this invention may take the form of an extruded ribbon or tape, a molded gasket or sheet. In liquid or paste form it may be applied by brush to surfaces to be bonded or may be sprayed on or used as a dip coating for such surfaces.

The foregoing plastisol composition, when properly utilized as described hereinafter, results in a one component, solvent free sealant or bonding system which permits the sealing or joining of metal or plastic items without costly surface pretreatment. The electromagnetically induced bonding reaction occurs rapidly and is adaptable to automated fabrication techniques and equipment.

To accomplish the establishment of a concentrated and specifically located heat zone by induction heating for sealing or bonding in accordance with the invention, it has been found that the electromagnetic adhesive plastisol compositions described above can be activated and a seal or bond created by an induction heating system operating with an electrical frequency of the electromagnetic field of from about 5

to about 30 megacycles and preferably from about 15 to 30 megacycles, said field being generated from a power source of from about 1 to about 30 kilowatts, and preferably from about 2 to about 5 kilowatts. The electromagnetic field is applied to the articles to be bonded for a period of time of less than about 2 minutes.

As heretofore mentioned, the electromagnetic induction sealing or bonding system and improved electromagnetic adhesive compositions of the present invention are applicable to the sealing or bonding of metals, thermoplastic and thermoset material, including fiber reinforced thermoset material.

The following examples will help to explain, but expressly not limit, the instant invention. Unless otherwise noted, all parts and percentages are by weight.

Example 1 Plasticizer (a)

To 34.8 g of tolylene diisocyanate was added dropwise 13 g of 2-hydroxyethyl methacrylate at a temperature not to exceed 40° C. After the addition of 2-hydroxyethyl methacrylate, the reaction mixture was stirred overnight to give a white, solid product. The product was warmed to melt at a temperature around 60° C. To this product melt, 102.5 g polypropylene glycol (MW = 1,025 g/mole), 0.1 g hydroquinone and 0.1 g of dibutyl tin dilaurate was added dropwise over 4 hours. The reaction mixture was stirred at 60° C until the isocyanate absorption in IR spectrum disappeared. The product, i.e.,

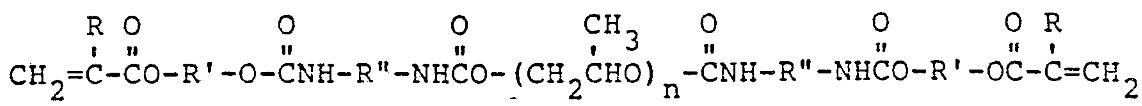

wherein R is $-CH_3$; R′ is $-CH_2-CH_2-$, R″ is

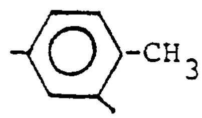

and n is about 17,
was obtained.

Example 2 Plasticizer (c)

To 300 g of MDI in 600 ml of methylene chloride containing 0.663 g of dibutyl tin dilaurate catalyst was added 156 g of 2-hydroxyethyl methacrylate at a rate of about 100 ml per hour. The reaction mixture was stirred for 18 hours at room temperature. An additional 1,600 ml of methylene chloride solvent was added to the reaction on completion and the mixture was placed in a dropping funnel. The mixture was then dropped at a rate of about 250 ml per hour into a resin kettle with stirrer containing 870 g of polypropylene glycol having molecular weight of 725 and 1.266 g of hydroquinone. After the disappearance of the isocyanate group as determined by IR, the mole of triethylamine (121.4 g) was added to the resin kettle. 1 mole of benzoyl chloride (168.7 g) was added to the reaction mixture dropwise at a rate of about 200 ml per hour. Stirring was increased due to the increase in viscosity of the reaction mixture. Stirring was continued at room temperature for 14 hours. The reaction product was then washed twice with 500 ml distilled water using a separatory funnel followed by the wash with 10 g of sodium bicarbonate in 500 ml distilled water and a final rinse with an additional 500 ml of distilled water. The product, i.e.,

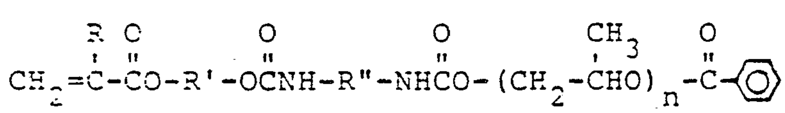

wherein R is $-CH_3$; R' is $-CH_2-CH_2-$, R" is

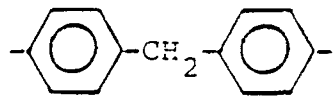

and n is about 12,
was dried in a rotary evaporator for 1 hour at 60 °C to remove any remaining solvent.

Example 3

Procedure is the same as Example 1 except 36.6 g of Isonate-181 (a modified liquid di-p-isocyanatodiphenyl methane from Upjohn) was used to replace 34.8 g of tolyene diisocyanate. The product had a high viscosity.

Example 4

Procedure is the same as Example 1 except 72.5 g of a polypropylene glycol (MW = 725 g/mole) was used to replace 102.5 g of polypropylene glycol with a molecular weight of 1,025 g/mole.

Example 5

7.5 g of synthetic Plasticizer (a) from Example 1 was dispersed with 2.5 g of pulverized polymethyl methacrylate (Acryloid A-30)® at room temperature. The dispersion was storage stable at 40 °C for at least 5 days. The dispersion fluxed to a clear, rubbery solid at 120 °C in 5 minutes.

Example 6

75 g of synthetic Plasticizer (a) from Example 4 was dispersed with 25 g of pulverized polymethyl methacrylate in a high shear mixer at room temperature. The dispersion was storage stable at 40 °C for at least 5 days. The dispersion fluxed to a clear, rubbery solid at 120 °C in 5 minutes.

Example 7

7.5 g of synthetic Plasticizer (a) from Example 5 was dispersed with 2.5 g of pulverized polymethyl methacrylate at room temperature. The dispersion was storage stable at 40 °C for 3 days. The liquid dispersion fluxed to a clear rubbery solid at 120 °C in 5 minutes with good adhesion to the substrate electrodeposition coating.

Example 8

56.7 g of Plasticizer (a) from Example 1 was blended with 35 g of finely powdered calcium carbonate, 8.3 g of pulverized polymethyl methacrylate and 0.57 g of 1,1-di(t-butylperoxy)3,3,5-trimethylcyclohexane initiator, commercially available from Pennwalt under the tradename "Lupersol-231"® After applied as a sealant on an electrodeposition coating on steel, the sealant becomes a rubbery solid with good adhesion after 5 minutes heating at 120 °C and provided cohesive failure against peeling after 30 minutes heating at 120 °C.

Example 9

Example 8 was repeated with the same results except that 56.7 g of Plasticizer (c) from Example 2 was substituted for Plasticizer (a).

**Claims**

**1.** A plastisol dispersion composition in which
(1) at least one poly(meth)acrylate thermoplast in particle form having a particle size in the range from 0.01 to 1,500 μm is dispersed in

(2) a liquid plasticizer member of the group consisting of

(a) the reaction product of one mol of a polyether or polyester diol, two moles of a diisocyanate and two moles of a hydroxyalkyl (meth)acrylate;

(c) the reaction product of one mol of a polyester or polyether diol, one mole of a diisocyanate, one mole of hydroxyalkyl (meth)acrylate and one mole of an acyl halide;

(d) mixtures of (a) and (c);

said liquid plasticizer being present in an amount ranging from 5 to 2,000 parts by weight per 100 parts of said thermoplast.

**2.** The composition of Claim 1 containing in addition from 0.01 to 10% by weight of the plasticizer of a thermal initiator.

**3.** The composition of Claim 1 containing in addition from 0.01 to 5% by weight of the plasticizer of a photoinitiator.

**4.** A plastisol dispersion composition in which

(1) at least one poly(meth)acrylate thermoplast in particle form having a particle size in the range from 0.01 to 1,500 µm is dispersed in

(2) a liquid plasticizer comprising

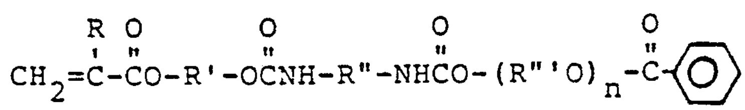

wherein R is H or $-CH_3$; R' is an alkylene containing 1-3 carbon atoms; R" isi the organic moiety remaining after reaction of both isocyanate groups ona diisocyanate; and R'" is the polyester or polyether moiety remaining after reaction of both terminal hydroxyl groups on a polyester or polyether diol and wherein n is a figure corresponding to a molecular weight of the polyester-diol or-polyether-diol of at least 200, especially between or from about 700 to 3000, respectively.

**5.** The process of preparing a solidified homogeneous mass by admixising a plastisol dispersion composition comprising a composition according to claim 1 and thereafter, heating the admixture for a time sufficient to flux the mass.

**6.** The process of Claim 5 wherein the composition contains in addition from 0.01 to 10% by weight of the plasticizer of a thermal initiator.

**7.** The process of Claim 5 wherein the composition contains in addition from 0.01 to 5% by weight of the plasticizer of a photoinitiator.

**8.** The process of adhering two substrates which comprises using therebetween a plastisol dispersion composition according to claim 1 and, thereafter, heating said composition at a temperature sufficient to cause the adhesive to flux and become cured.

**9.** The process of Claim 8 wherein the composition contains in addition from 0.01 to 10% by weight of the plasticizer of a thermal initiator.

**10.** The process of Claim 8 wherein the composition contains in addition from 0.01 to 5% by weight of the plasticizer of a photoinitiator.

**11.** The process of adhering two substrates at least one of which is transparent which comprises using therebetween a plastisol dispersion comprising a composition from the group of compositions recited in claims 1 - 4 and, thereafter, heating said composition to a temperature below or at 120 °C for a time sufficient to cause the adhesive to flux and, thereafter exposing said composition to UV radiation for form a cured adhesive.

**12.** The composition of Claim 1 as a coating, a sealant or an adhesive.

**13.** The process of Claim 5 for preparing a coating, a sealant or an adhesive.

## Revendications

**1.** Composition de dispersion formant plastisol dans laquelle
(1) au moins un matériau thermoplastique de poly (méth) acrylate sous forme de particules ayant une dimension de particules dans l'intervalle compris entre 0,01 et 1.500 µm est dispersé dans
(2) un élément plastifiant liquide du groupe consistant
(a) du produit réactionnel d'une mole d'un polyéther ou polyester diol, de deux moles d'un diisocyanate et de deux moles d'un hydroxyalkyl (méth) acrylate;
(c) du produit réactionnel d'une mole d'un polyester ou polyéther diol, d'une mole d'un diisocyanate, d'une mole d'hydroxyalkyl (méth) acrylate et d'une mole d'un acyl halogénure;
(d) des mélanges de (a) et (c);
ledit plastifiant liquide étant présent suivant une quantité comprise entre 5 et 2000 parties en poids par 100 parties dudit matériau thermoplastique.

**2.** Composition suivant la revendication 1 contenant en outre de 0,01 à 10% en poids du plastifiant d'un initiateur thermique.

**3.** Composition suivant la revendication 1 contenant en outre de 0,01 à 5% en poids du plastifiant d'un photoinitiateur.

**4.** Composition de dispersion formant plastisol dans laquelle
(1) au moins un matériau thermoplastique de poly (méth) acrylate sous forme de particules possédant une dimension de particules dans l'intervalle compris entre 0,01 et 1.500 µm, est dispersé dans
(2) un plastifiant liquide comprenant

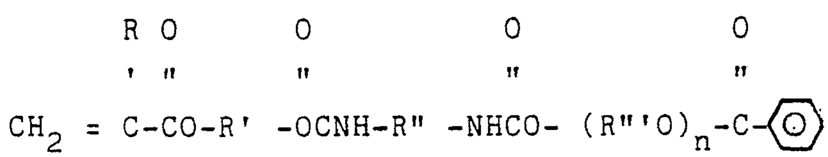

où R est H ou $-CH_3$; R' est un alkylène contenant de 1 à 3 atomes de carbone; R" est la partie organique restant après réaction des deux groupes isocyanate sur un diisocyanate; et R''' est la fraction polyéther ou polyester restant après réaction des deux groupes hydroxyle terminaux sur un polyester ou polyéther diol et où n est un nombre correspondant à un poids moléculaire du polyester-diol ou polyéther-diol d'au moins 200, en particulier entre ou d'environ 700 à 3000 respectivement.

**5.** Procédé de préparation d'une masse homogène solidifiée par mélange d'une composition de dispersion formant plastisol comprenant une composition selon la revendication 1 et ensuite, par chauffage du mélange pendant un temps suffisant pour ramollir la masse.

**6.** Procédé suivant la revendication 5, dans laquelle la composition contient en outre de 0,01 à 10% en poids du plastifiant d'un initiateur thermique.

**7.** Procédé suivant la revendication 5 dans laquelle la composition contient en outre de 0,01 à 5% en poids du plastifiant d'un photoinitiateur.

**8.** Procédé pour faire adhérer deux substrats qui consiste à utiliser entre eux une composition de dispersion formant plastisol suivant la revendication 1 et ensuite à chauffer ladite composition à une température suffisante pour permettre à l'adhésif de ramollir et de devenir durci.

9. Procédé selon la revendication 8 dans lequel la composition contient en outre de 0,01 à 10% en poids du plastifiant d'un initiateur thermique.

10. Procédé selon la revendication 8 dans lequel la composition contient en outre de 0,01 à 5% en poids du plastifiant d'un photoinitiateur.

11. Procédé pour faire adhérer deux substrats dont au moins l'un est transparent, qui consiste à utiliser entre eux une dispersion formant plastisol comprenant une composition du groupe de compositions décrites dans les revendications 1 à 4, et ensuite à chauffer ladite composition à une température en-dessous de ou à 120 °C pendant un temps suffisant pour permettre à l'adhésif de ramollir et ensuite à exposer ladite composition à un rayonnement UV pour former un adhésif durci.

12. Composition suivant la revendication 1 utilisée sous la forme d'un revêtement, d'un agent de scellement ou d'un adhésif.

13. Procédé suivant la revendication 5 pour préparer un revêtement, un agent de scellement ou un adhésif.

## Patentansprüche

1. Plastisoldispersionszusammensetzung, in welcher
   (1) mindestens ein teilchenförmiges Polymethacrylatplastomeres einer Teilchengröße in dem Bereich von 0,01 bis 1500 µm dispergiert ist in
   (2) einem flüssigen Weichmacher der Gruppe aus
      (a) dem Reaktionsprodukt von einem Mol eines Polyether- oder Polyesterdiols, zwei Molen eines Diisocyanats und zwei Molen eines Hydroxyalkyl(meth)acrylats;
      (c) dem Reaktionsprodukt von einem Mol eines Polyester- oder Polyetherdiols, einem Mol eines Diisocyanats, einem Mol Hydroxyalkyl(meth)acrylat und einem Mol eines Säurehalogenids;
      (d) Mischungen von (a) und (c);

   wobei der flüssige Weichmacher in einer Menge von 5 bis 2000 Gewichtsteilen je 100 Teilen des Plastomeren anwesend ist.

2. Zusammensetzung nach Anspruch 1 enthaltend außerdem 0,01 bis 10% des Gewichts des Weichmachers an einem thermischen Initiator.

3. Zusammensetzung nach Anspruch 1 enthaltend außerdem 0,01 bis 5% des Gewichts des Weichmachers an einem Fotoinitiator.

4. Plastisoldispersionszusammensetzung, in welcher
   (1) mindestens ein teilchenförmiges Poly(meth)acrylatplastomeres einer Teilchengröße in dem Bereich von 0,01 bis 1500 µm dispergiert ist in
   (2) einem flüssigen Weichmacher enthaltend

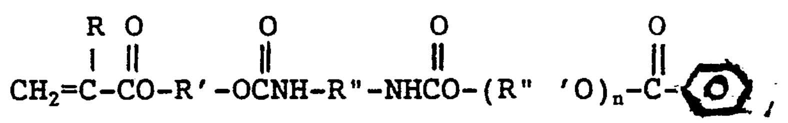

   worin R für H oder $-CH_3$ steht; R' ein 1 bis 3 Kohlenstoffatome enthaltendes Alkylen ist; R" der nach der Reaktion beider Isocyanatgruppen eines Diisocyanats verbleibende organische Rest ist; und R"' der nach der Reaktion beider endständiger Hydroxylgruppen an einem Polyester- oder Polyetherdiol verbleibende Polyester- oder Polyetherrest ist und wobei n eine Zahl entsprechend einem Molekulargewicht des Polyesterdiols oder Polyetherdiols von mindestens 200, vor allem zwischen oder von etwa 700 bis 3000 ist.

5. Verfahren zum Herstellen einer verfestigten homogenen Masse durch Vermischen einer Plastisoldispersionszusammensetzung, welche eine Zusammensetzung nach Anspruch 1 umfaßt, und anschließendes Erhitzen der Mischung während einer zum Schmelzen der Masse ausreichenden Zeit.

**6.** Verfahren nach Anspruch 5, in welchem die Zusammensetzung außerdem 0,01 bis 10% des Weichmachergewichts an einem thermischen Initiator enthält.

**7.** Verfahren nach Anspruch 5, in welchem die Zusammensetzung außerdem 0,01 bis 5% des Gewichts des Weichmachers eines Fotoinitiators enthält.

**8.** Verfahren zum Verkleben von zwei Substraten, wobei man zwischen diesen eine Plastisoldispersionszusammensetzung nach Anspruch 1 anwendet und anschließend die Zusammensetzung auf eine ausreichende Temperatur erhitzt, um das Klebemittel zum Schmelzen zu bringen und härten zu lassen.

**9.** Verfahren nach Anspruch 8, wobei die Zusammensetzung außerdem 0,01 bis 10% des Gewichts des Weichmachers eines thermischen Initiators enthält.

**10.** Verfahren nach Anspruch 8, worin die Zusammensetzung außerdem 0,01 bis 5% des Gewichts des Weichmachers eines Photoinitiators enthält.

**11.** Verfahren zum Verkleben von zwei Substraten, von denen mindestens eines transparent ist, wobei man zwischen diesen eine Plastisoldispersion anwendet, die eine Zusammensetzung aus der Gruppe der Zusammensetzungen der Ansprüche 1 bis 4 enthält, und dann diese Zusammensetzung auf eine Temperatur unter oder von 120 °C bei einer ausreichenden Zeit erhitzt, um das Klebemittel zum Schmelzen zu bringen, und anschließend die Zusammensetzung UV-Strahlung aussetzt, um ein gehärtetes Klebemittel zu bilden.

**12.** Die Zusammensetzung von Anspruch 1 als Schicht, Versiegelung oder Klebemittel.

**13.** Verfahren nach Anspruch 5 zum Herstellen einer Schicht, einer Versiegelung oder eines Klebemittels.